# EUROPEAN PATENT SPECIFICATION

(11) **EP 4 052 977 B1**
(45) Date of publication and mention of the grant of the patent: **04.06.2025**
(21) Application number: 21160855.9
(22) Date of filing: 05.03.2021
(51) Int. Cl.: B60T 15/02, B60T 15/30, B60T 17/22, F16K 11/00, B60T 13/66

(54) **INTERFACE ADAPTER FOR A CONTROL VALVE AND CONTROL VALVE WITH AN INTERFACE ADAPTER**
SCHNITTSTELLENADAPTER FÜR EIN REGELVENTIL UND REGELVENTIL MIT EINEM SCHNITTSTELLENADAPTER
ADAPTATEUR D'INTERFACE POUR UNE VANNE DE COMMANDE ET VANNE DE COMMANDE AVEC UN ADAPTATEUR D'INTERFACE

(43) Date of publication of application: 07.09.2022
(73) Proprietor: KNORR-BREMSE Systeme für Schienenfahrzeuge GmbH, 80809 München (DE)
(72) Inventor: LIKTOR, Balazs, 1096 Budapest (DE); HEGEDÜS, István, 9024 Györ (HU); PIEPER, Jens-Erik, 80935 München (DE)

(56) References cited:
- EP-A1- 0 861 180
- EP-B1- 0 861 180
- WO-A2-02/22421
- US-A1- 2019 061 730

## Description

The present invention relates to an interface adapter for a control valve, particularly for a rail car pneumatic brake system, and to a control valve, comprising such an interface adapter.

Control valves in a pneumatic brake system have to react precisely to changes in the brake pipe pressure and to provide the corresponding brake cylinder pressure. Modern pneumatic brake systems use electric valves that receive braking signals by wire or radio to control the airflow to and from the brake cylinder. In order to provide a safely functioning and reliable pneumatic brake system, the valves and the pipe system connected to the valves need to be monitored and checked.

For such an electric controlled brake system, EP 3 608 184 A1 proposes a valve diagnostic and monitoring system, especially for a distributor valve in a pneumatic brake system for rail cars. The monitoring system can monitor and check different parameters, especially different pressures in the control valve and the pipe system that is in fluid communication with the control valve.

The referenced solution only gives a general overview of such a diagnostic and monitoring system, but there is no concrete mechanical implementation of the concept within the control valve or a solution on how to implement the monitoring system into the control valve. The downside of the solution is further that the monitoring system is designed to be used with a new generation of control valves and has an interface that is adapted to the new generation of control valves. Existing control valves have standardised interfaces to which the interface of the new monitoring system is not compatible. Thus the monitoring system can not be used as a retrofit solution to upgrade existing control valves. Another problem is that, especially in rail car pneumatic brake systems, the installation space for the control valve is limited, making it difficult to integrate the monitoring system without interference with the control valve or other components next to it.

Finally, US 2019/0061730 A1 shows a distributor valve for a pneumatic brake System of a rail vehicle, wherein the distributor valve comprises a pipe bracket and two housing portions. Between the pipe bracket and the housing portions a adapter plate may be placed.

WO 02/22421 A2 describes a car control device includes a pneumatic manifold with a plurality of fluid ports integrally formed in a housing. The configuration of the manifold and ports enables fluid communication with a brake valve, and a control valve module. The car control device also includes a functional control module in electric communication with a power management module, the control valve module, and the network. Each of the power management module, and the control valve module, the functional control module, and a battery assembly are all positioned to separately accessible within a housing.

EP0861180 A1 describes an electropneumatic brake control valve unit capable of operating at the interface of the emergency brake portion or the service brake portion of a standard brake control valve as a retrofit unit or operating as a stand alone electropneumatic unit.

It is an object of the present invention to overcome the above-mentioned disadvantages of the state of the art, particularly to provide a mechanical solution to integrate the monitoring system in existing control valves as a retrofit solution and to provide a standardised interface across all valve products, preferably in order to gain easy access to all pressures that need to be monitored by the monitoring system to provide a reliable pneumatic brake system.

This objective is solved by the subject matter of the independent claims. Advantageous embodiments are subject to the dependent claims and will be set out herein below.

An interface adapter for a control valve, particularly of a rail car pneumatic brake system, according to the invention, is designed to be integrated in a control valve having at least two housing compartments. The interface adapter enables a modular construction of the control valve, when an additional housing compartment or module with an interface that is not compatible with a standardised interface of the existing control valve, needs to be integrated in the control valve. Preferably, the interface adapter is placed between the two housing compartments of the control valve. The housing compartments and/or the additional module or housing compartment can be connected to the interface adapter, preferably in an easy detachable way, for example by screws. The interface adapter can be made out of steel, aluminium, polymer or other material to be suitable for working temperatures between -50°C and 70°C.

The interface adapter further comprises an essentially even plate structure having a fluid interface duplicate plate section and a further interface plate section, wherein the fluid interface duplicate plate section and the further interface plate section extended in the same plane.

The control valve can also comprise one ore more further housing compartments. The housing compartments can be rearranged or exchanged easily, providing a modular construction of the control valve. The housing compartments can be connected to each other, preferably in an easy detachable way. Each housing compartment can comprise or be connected to one or more modules of the control valve. These modules may include but are not limited to a valve arrangement, such as a distributor valve or a relay valve arrangement, or an electronic module, such as a monitoring system. The relay valve arrangement may comprise one or more relay valves. Such a modular construction has the advantage that the control valve can be adapted flexibly to potential requirements and that all modules requiring maintenance are easy detachable. The housing compartments can be made out of steel, aluminium, polymer or other material to be suitable for working temperatures between -50°C and 70°C. In an example embodiment the control valve comprises a first housing compartment, in particular a valve bracket, that does not comprise and is not connected to a module of the control valve. Instead the valve bracket my be connected to one or more further housing compartments. The further housing compartments each can comprise or can be connected to a module of the control valve, such as a distributor valve, a relay valve arrangement or an electronic module. In this embodiment the interface adapter is preferably placed between the valve bracket and the other housing compartments each comprising or connected to a module of the control valve, such as a distributor valve, a relay valve arrangement or an electronic module.

The at least two housing compartments of the control valve are in fluid communication with each other via a fluid interface. Via this fluid interface the fluid of the brake system, in particular the air stream, can pass from one housing compartment to the other housing compartment. As the control valve can comprise more than two housing compartments, the fluid interface can be designed to enable fluid communication between more than two housing compartments, preferably between all housing compartments. Further, there can be more than one fluid interface wherein each fluid interface enables fluid communication between two housing compartments, in particular to enable fluid communication between all housing compartments. Preferably each housing compartment comprises at least one fluid interface. The fluid interface can be realized by at least one fluid inlet or outlet. The fluid interface can also comprise one or more further fluid inlets and/or outlets. Preferably at least one housing compartment has further fluid inlets and/or outlets to enable fluid communication with other components of the brake system. This fluid communication can be realized by a pipe system. For example the pipe system connects the control valve with the brakes, wherein the brake pipe leads the air stream from the control valve to the brakes, as well as the emergency reservoir, the auxiliary reservoir and the brake cylinder, wherein the pipes lead the air stream to the control valve. In this example the fluid interface between the housing compartments guides the air stream, coming into the valve bracket through a fluid channel, from the valve bracket to the distributor valve and the relay valve. From there it can pass back to the valve bracket and through the brake pipe to the brakes.

In order to enable a modular construction of the control valve, preferably all housing compartments can be in fluid communication via a standardised interface. As a new generation of control valves was developed, some housing compartments or modules, that may need to be integrated in the control valve, can have a different interface, in particular a new standardised interface. For example a monitoring system was developed, that can monitor and check different parameters in the control valve and the pipe system in order to provide a reliable brake system. This monitoring system has a new standardised interface that is not compatible with the standardised interface of the existing control valve.

According to an aspect of the invention, the interface adapter comprises a fluid interface duplicate for enabling fluid communication between the housing compartments of the control valve through the interface adapter. The fluid interface duplicate therefore matches the fluid interface of the housing compartments of the existing control valve, in particular the standardised interface of the existing control valve. This allows to place the interface adapter between the housing compartments without interrupting the fluid flow and hence the fluid communication and without having to change the existing, in particular standardised, fluid interface design.

The interface adapter also comprises a further interface being in fluid communication with the fluid interface duplicate for enabling access to the fluid communication between the housing compartments from outside the housing, in particular to enable fluid communication with the additional module and/or housing compartment that needs to be integrated. The additional module or housing compartment is preferably connected, in particular mounted, to the further interface. The two interfaces of the interface adapter can be designed independently from each other and can easily be adapted to specific requirements. Thus the further interface can be adapted as required to be compatible with the interface of an additional module and/or housing compartment that is not compatible with the standardised interface of the control valve. For example the further interface can be adapted to the new standardised interface of the monitoring system.

The further interface of the interface adapter is in fluid communication with the fluid interface duplicate so it is also in fluid communication with the fluid interface between the housing compartments of the control valve. Thus the further interface enables access to the fluid communication between the housing compartments from outside the housing to integrate an additional module or housing compartment. For example the fluid communication between the housing compartments can be accessed by a monitoring system with a standardised interface of the new generation of control valves. In this embodiment the interface adapter can adapt the old standardised interface of the existing control valve to the new standardised interface of the new generation of control valves. So it enables a mechanical implementation of the monitoring system as a retrofit solution to upgrade the existing control valve. It also provides a standardised interface across all valve products, especially across existing control valves and the new generation of control valves, because the same housing compartments and/or modules, for example the monitoring system, can be integrated in all control valves.

The monitoring system can check and monitor different parameters in order to provide a reliable brake system. The parameters may be related to the flow and/or pressure of the fluid at various points in the control valve or the pipe system. Other parameters may include but are not limited to temperature, moisture or vibrations at various points in the control valve or the pipe system. It is also possible to monitor one or more further pressures and/or one or more further other paratemeters. In an example embodiment there are various pressures that need to be monitored by the monitoring system in order to provide a reliable brake system. These include but are not limited to the pressures of a auxiliary reservoir and a emergency reservoir of the control valve, a relay valve arrangement, a brake cylinder, a brake pipe and a distributor valve. In this embodiment an interface adapter, according to the invention enables easy access to all pressures that need to be monitored by the monitoring system, as they can be accessed from outside the housing via the further interface that is in fluid communication with the fluid interface duplicate and hence the fluid interface between the housing compartments.

According to the invention, the interface adapter comprises an essentially even plate structure. The plate structure has a fluid interface duplicate plate section and a further interface plate section. The fluid interface duplicate plate section and the further interface plate section extend in the same plane. They may be manufactured in one piece. In this embodiment the interface adapter, in particular an intermediate plate, provides a simple mechanical solution to integrate the monitoring system as a retrofit solution to existing control valves.

In another example embodiment, the interface adapter is configured to branch off the fluid communication in a direction at least section wisely parallel to the fluid interface between the housing compartments. This allows placing the further interface at a certain distance to the fluid interface duplicate at a better accessible position or at a position where the additional module and/or housing compartment connected to the interface adapter, for example the monitoring system, does not interfere with the housing compartments of the control valve or other components of the brake system next to the control valve. Thus it allows using the limited installation space, especially in rail car pneumatic brake systems, in an optimal way. In an example embodiment the monitoring system can be placed next to an existing housing compartment instead of being mounted on the housing compartment. This reduces the installation space needed for the control valve.

In a further example embodiment, the fluid interface duplicate of the interface adapter comprises at least one through hole, preferably at least two, three, four, five, six, seven or eigth through holes, for enabling distinct fluid flows through the interface adapter. The fluid interface duplicate can also comprise one or more further through holes to enable distinct fluid flows through the interface adapter. In this embodiment the further interface comprises a number of openings adapted to the number of through holes of the fluid interface duplicate. In an example embodiment the number of through holes of the fluid interface duplicate and the number of openings of the further interface can be adapted to the number of pressures that need to be monitored by the monitoring system.

In a further development each opening of the further interface is in fluid communication with one through hole of the fluid interface duplicate. The through holes enable an uninterrupted fluid flow between the housing compartments of the control valve. The fluid communication between each through hole and each opening enables access to the fluid flow between the housing compartments from outside the housing, for example by a monitoring system.

Preferably, the fluid communication between each opening and through hole is realized by means of a fluid channel extending through the interface adapter, in particular the plate structure, or a groove arranged on an outer surface of the interface adapter, in particular the plate structure. Such an embodiment has the advantage that there is no need for pipes to enable fluid communication between the fluid interface of the housing compartments and an additional module or housing compartment, for example the monitoring system.

According to another aspect of the invention that can be combined with previous aspects and example embodiments of the invention, a control valve, particularly for a rail car pneumatic brake system, comprises a housing with at least two housing compartments. The housing can also comprise one or more further housing compartments. The housing compartments are in fluid communication with each other via a fluid interface. The control valve according to the invention further comprises an interface adapter configured to transfer the fluid interface of the housing compartments to an accessible space outside the housing for enabling a further access to the fluid communication, for example by a monitoring system. Thus the control valve provides a mechanical solution to integrate the monitoring system in existing control valves as a retrofit solution to upgrade the existing control valve. It also provides a standardised interface across all valve products, especially across existing control valves and new generation control valves.

In an example embodiment the control valve comprises an interface adapter according to one of the previous aspects or example embodiments to make use of the advantages described above.

In a further example embodiment, the interface adapter is configured to transfer the fluid interface in a direction at least section wisely parallel to the interface between the housing compartments. This allows placing the further access to the fluid communication at a certain distance to the fluid interface at a better accessible position or at a position that offers more installation space to integrate an additional module and/or housing compartment, for example a monitoring system. Thus it allows using the limited installation space, especially in rail car pneumatic brake systems, in an optimal way.

Preferably the further interface of the interface adapter is an electronics interface configured to be connected to an electronic module or a dummy for occupying the electronics interface. Preferably the electronic module is mounted to the interface adapter, in particular to the electronics interface. Preferably the electronic module or the dummy are mounted in an easy detachable way, for example by screws. This embodiment has the advantage that it provides a modular construction of the control valve, wherein either an electronic module or a dummy can be connected to the same electronics interface of the interface adapter. The dummy is needed in brake systems without an electronic module, to close the openings of the electronics interface in order to prevent air from getting into the brake system. The dummy preferably comprises an essentially even plate structure.

In another example embodiment the electronic module comprises a measuring and/or monitoring device, in particular a data hub, configured to determine and/or monitor at least one parameter of the fluid flow, such as a pressure. The measuring and/or monitoring device can also determine and/or monitor one or more further parameters of the fluid flow, such as a pressure. Other parameters that can be determined and/or monitored can include but are not limited to temperature, vibrations and/or moisture. In an example embodiment the pressures that need to be measured and/or monitored include the pressures of an auxiliary reservoir and an emergency reservoir of the control valve, a relay valve arrangement, a distributor valve, a brake cylinder and a brake pipe.

In a further development, the measuring and/or monitoring device, in particular the data hub, comprises a predetermined sensor arrangement of at least one sensor, in particular a pressure sensor. The predetermined sensor arrangement can also comprise one or more further sensors, in particular one or more further pressure sensors. The predetermined sensor arrangement can further include additional temperature sensors, accelerometers and/or moisture sensors. The data hub helps to integrate the data from all sensors and to process it. It can also transmit the data to a processing unit wirelessly or by wire. Preferably the electronics interface design is adapted to the predetermined sensor arrangement.

Preferably the pressure sensors of the predetermined sensor arrangement are each allocated to one electronics interface opening, enabling easy access to all parameters, for example all pressures, that need to be monitored in order to provide a reliable brake system.

In a particular embodiment of the control valve, each of the housing compartments comprises or is connected to a valve arrangement, such as a distributor valve or a relay valve arrangement. The relay valve arrangement comprises one or more relay valves that can quickly increase or decrease the air pressure. They help to shorten the pressure application time of the brake cylinders and also function as quick exhaust valves when the brakes are released.

In a further development, the further interface comprises a connection, such as an opening or a hole, for connecting to a fluid pipe enabling fluid communication of the further interface with the relay valve arrangement, in particular for enabling access to the control pressure of the relay valve arrangement.

The following detailed description refers to the accompanying drawings. The same reference numbers may be used in different drawings to identify the same or similar elements. In the following description, for purposes of explanation and not limitation, specific details are set forth such as particular structures, functionality, etc. in order to provide a thorough understanding of the various aspects of the claimed invention.

However, it will be apparent to those skilled in the art having the benefit of the present disclosure that the various aspects of the invention claimed may be practiced in other examples that depart from these specific details. In certain instances, descriptions of well-known devices and methods are omitted so as not to obscure the description of the present invention with unnecessary detail.
- Fig. 1: shows an example embodiment of a control valve according to the invention comprising an interface adapter according to the invention configured to implement a monitoring system.
- Fig. 2: shows the control valve in Fig. 1 from the back.
- Fig. 3: shows the interface of the monitoring system that is not compatible with the fluid interface of the control valve.
- Fig. 4: shows a schematic view of an interface adapter according to the invention.

In the following description of prefered embodiments of the present invention, a control valve according to the invention is generally indicated with the reference numeral 1.

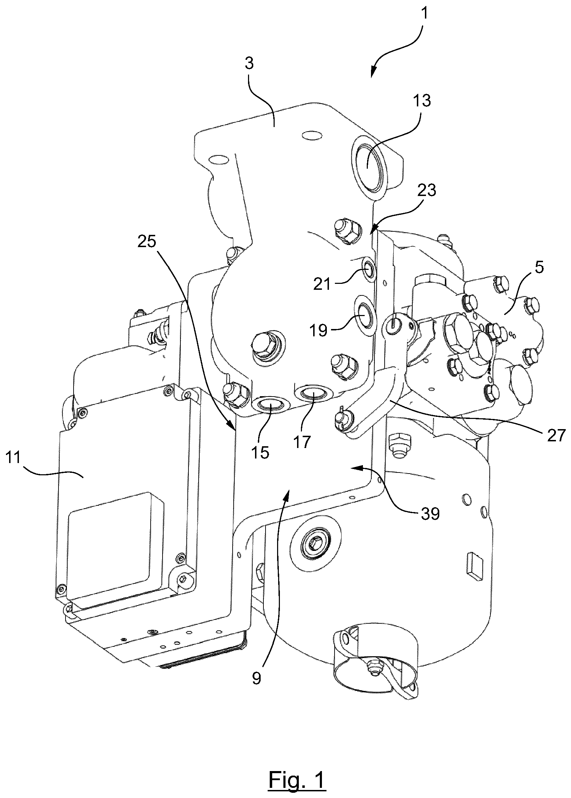

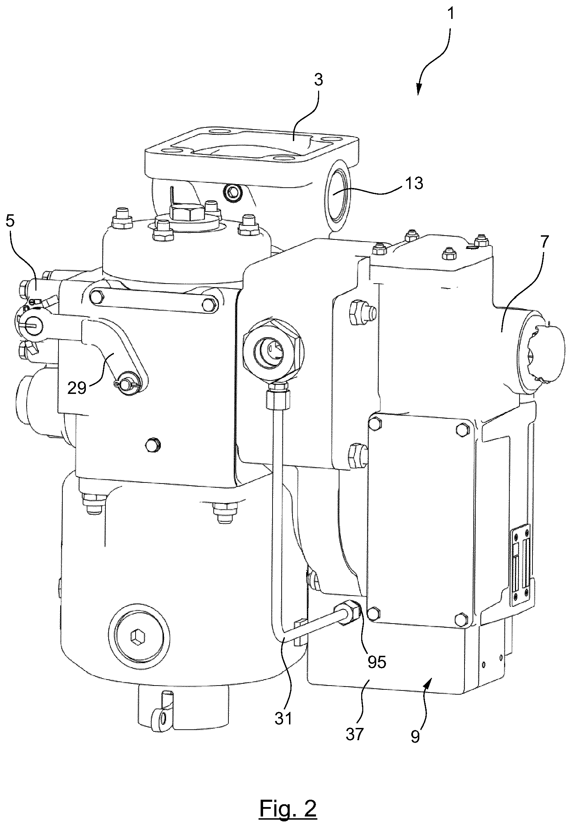

Fig. 1 and Fig. 2 show a control valve 1, particularly of a rail car pneumatic brake system, with a modular construction to be able to adapt the control valve 1 as flexibly as possible to potential requirements. It comprises three housing compartments 3, 5, 7.

The first housing compartment, a valve bracket 3, is designed to hold the other two housing compartments 5, 7 and/or to mount the control valve 1 for example to a chassis structure of a rail car and to connect the control valve 1 to other components of the brake system. The valve bracket 3 comprises a fluid channel 13 to guide the fluid, in particular the air stream of compressed air from the pneumatic brake system, into the control valve 1. It further comprises various pressure inlets and outlets 15, 17, 19, 21, in particular one pressure outlet and three pressure inlets, to enable fluid communication with a pipe system that is connected to other components of the brake system (not shown in Fig.1 and Fig. 2). The pipe system connects the control valve 1 with the brakes, wherein the brake pipe leads the air stream from the control valve 1 to the brakes, as well as the emergency reservoir, the auxiliary reservoir and the brake cylinder, wherein the pipes lead the air stream to the control valve 1.

The other two housing compartments each comprise a module of the control valve 1. The second housing compartment 5 comprises a distributor valve and the third housing compartment 7 comprises a relay valve arrangement comprising one relay valve. There may also be a second relay valve adjacent to the first relay valve.

At least two of the three housing compartments 3, 5, 7, in particular all three housing compartments 3, 5, 7 are in fluid communication with each other via a standardised fluid interface 23. Via this fluid interface 23 the air stream coming into the valve bracket 3 through the fluid channel 13 can pass from the valve bracket 3 to the distributor valve 5 and the relay valve 7. From there it can pass back to the valve bracket 3 and through the brake pipe to the brakes.

The control valve 1 further comprises an interface adapter, generally indicated with the reference numeral 9 which, in the example embodiments of Fig. 1 to 4, is formed as an intermediate plate 9 with an even plate structure. The intermediate plate 9 is placed between the valve bracket 3 and the other two housing compartments comprising the distributor valve 5 and the relay valve 7. All three housing compartments 3, 5, 7 are connected to the intermediate plate 9 in an easy detachable way. The valve bracket 3 and the housing compartment comprising the relay valve 7 are mounted on the intermediate plate 9 by screws. The housing compartment comprising the distributor valve 5 is mounted on the intermediate plate 9 by screws and two control levers 27, 29.

The intermediate plate 9 is needed to integrate an additional module, an electronic module, into the control valve 1 in particular without having to amend the interface structures and/or designs of the control valve and/or the additional module. This electronic module is a monitoring system 11, that can measure and/or monitor different parameters in the control valve 1 and the pipe system in order to provide a reliable pneumatic brake system. In particular the monitoring system 11 measures different pressures in the control valve 1 and the pipe system. These are the four pressures in the pipe system being in fluid communication with the valve bracket 3 (not shown in Fig. 1 and Fig. 2) as well as the pressures of the fluid streams between the valve bracket 3 and the distributor valve 5 as well as between the valve bracket 3 and the relay valve 7. The monitoring system 11 comprises a predetermined sensor arrangement with one pressure sensor for each pressure that needs to be monitored. The monitoring system also comprises a data HUB to integrate the data from all sensors, to process and transmit it. The monitoring system 11 is mounted to the intermediate plate 9 by screws.

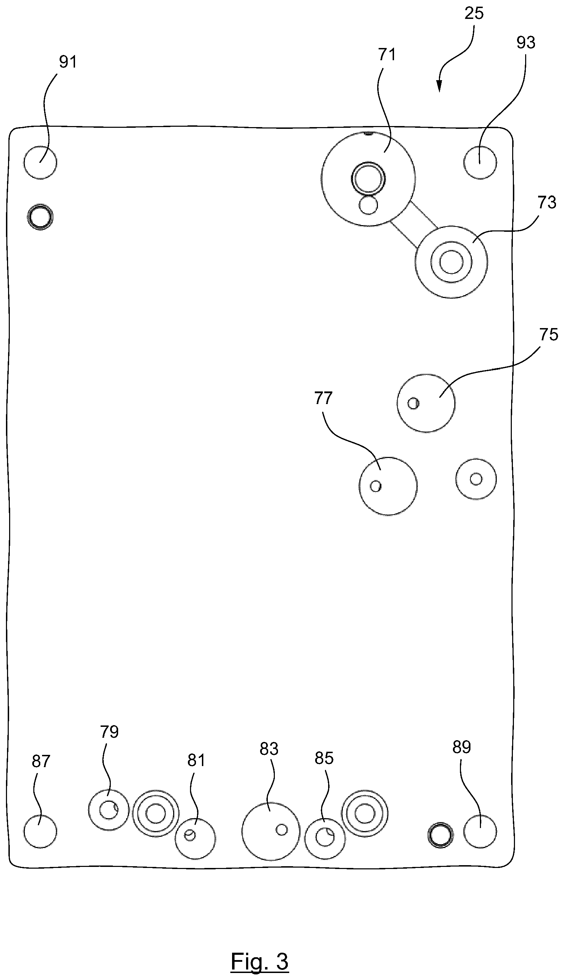

The fluid interface of the monitoring system 11 is preferably designed to be implemented in a new generation of control valves setting a new standard fluid interface. Therefore it has a new standardised fluid interface, a sensor interface 25 (Fig. 3), that is not compatible with the standardised fluid interface 23 of the housing compartments 3, 5, 7.

The control valve 1 further comprises an additional fluid pipe 31 that connects an opening 95 on the back side 37 of the intermediate plate 9 and the relay valve 7 to access the control pressure of the relay valve 7.

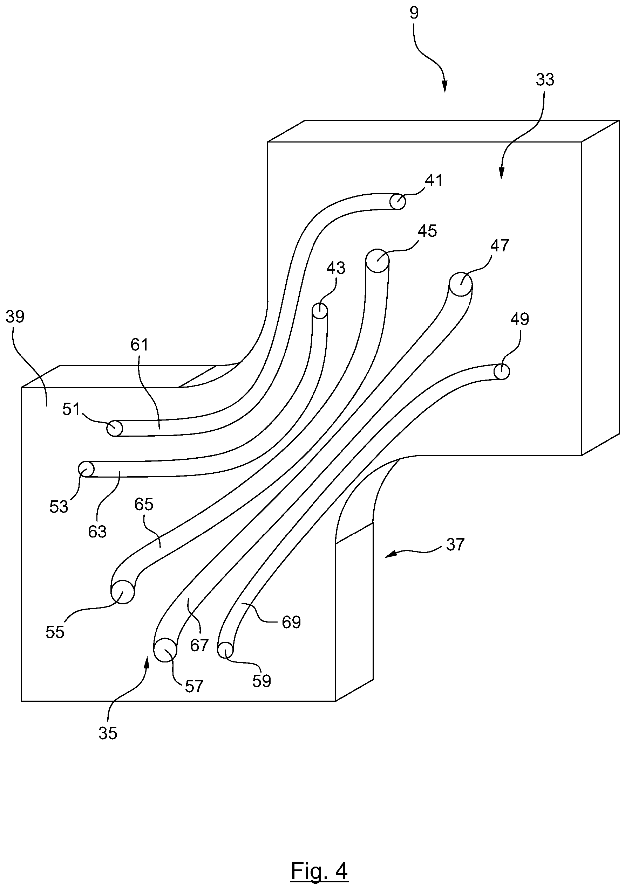

The intermediate plate 9 enables fluid communication between the monitoring system 11 and the housing compartments 3, 5, 7 of the control valve 1 and therefore provides a mechanical solution to integrate the monitoring system in an existing control valve 1 as a retrofit solution to upgrade the control valve 1. It also enables easy access to all pressures that need to be monitored by the monitoring system 11, because they can be accessed from outside the housing compartments 3, 5, 7. Fig. 4 schematically shows the front side 39 of the intermediate plate 9 to explain how the intermediate plate 9 works.

The front side 39 of the intermediate plate 9 comprises two fluid interface plate sections that extend in the same plane and are manufactured in one piece. Each of the fluid interface plate sections comprises a fluid interface. The first fluid interface is a fluid interface duplicate 33 that is compatible with the standardised interface 23 of the valve bracket 3 and the housing compartments comprising the distributor valve 5 and the relay valve 7. The fluid interface plate section 33 is placed between the housing compartments 3, 5, 7. It comprises a number of through holes 41, 43, 45, 47, 49 to enable uninterrupted fluid communication between the housing compartments 3, 5, 7 of the control valve 1 through the intermediate plate 9. The second fluid interface, the further fluid interface 35, is an electronics interface that is compatible with the predetermined sensor interface 25 of the monitoring system 11. The further interface 35 comprises a number of openings 51, 53, 55, 57, 59 adapted to the number of through holes 41, 43, 45, 47, 49 of the fluid interface duplicate 33. The monitoring system 11 is mounted on the further fluid interface plate section 35.

The fluid interface duplicate 33 and the further interface 35 are in fluid communication with each other. This means that that the monitoring system 11 in fluid communication with the further interface 35 is also in fluid communication with the fluid communication between the housing compartments 3, 5, 7. To enable this fluid communication each opening 51, 53, 55, 57, 59 of the further interface 35 is in fluid communication with one through hole 41, 43, 45, 47, 49 of the fluid interface duplicate 33. The fluid communication is realized by a number of grooves, notches or channels 61, 63, 65, 67, 69. The grooves are arranged on an outer surface 37 of the intermediate plate 9. It is also possible that the channels 61, 63, 65, 67, 69 extend through the solid material of the intermediate plate 9 and are not accessible from the outside along their extension. There is one groove for each through hole of the fluid interface duplicate 33 enabling the fluid communication with the corresponding opening of the further interface 35. For example the through hole 41 is in fluid communication with the opening 51 via the groove 61.

The intermediate plate 9 branches off the fluid communication parallel to the standardised fluid interface 23 between the valve bracket 3 and the housing compartments comprising the distributor valve 5 and the relay valve 7 by means of the grooves 61, 63, 65, 67, 69. This allows placing the further interface 35 at a position where it can be easily accessed by the monitoring system 11. It also allows placing the monitoring system 11 at any position in the limited installation space to prevent interference with the housing compartments 3, 5, 7 of the control valve 1 or other components of the brake system. In particular Fig. 1 shows that the monitoring system 11 is placed next to the valve bracket 3 instead of being mounted on the valve bracket 3, reducing the installation space needed for the control valve 1.

Fig. 3 shows the actual interface of the monitoring system 11, the sensor interface 25. As described above it has a number of openings adapted to the number of pressures that need to be monitored by the monitoring system 11. The openings are adapted to the predetermined sensor arrangement of the monitoring system 11, wherein each pressure sensor is allocated to one opening of the sensor interface 25. There are two openings for the distributor valve 5 (79, 81), to monitor the pressure of the air flow between the valve bracket 3 and the distributor valve 5. There are also two openings for the relay valve 7 (75, 77) to monitor the air flow between the valve bracket 3 and the relay valve 7. If the control valve 1 comprises a second relay valve adjacent to the first relay valve 7, the sensor interface 25 comprises two further openings adjacent to the openings 75, 77 for the first relay valve 7. The openings of the sensor interface 25 also enable fluid communication with the pipe system. There is one opening each for the pressure of the brake pipe (79) leading the air stream from the valve bracket 3 to the brakes and the pressures of the brake cylinder (75), the pre-control pressure (81), the emergency reservoir (83) and the auxiliary reservoir (35), wherein the pipes lead the air stream to the valve bracket 3.

Further the sensor interface 25 comprises two openings 71, 73 for a breather and safety valve (not shown) to balance the internal pressures of the control valve 1 with the environment and to release internal over pressure if for example a pipe bursts.

Further there are four holes 87, 89, 91, 93 to mount the monitoring system 11 on the sensor interface 25. In an alternative embodiment (not shown) a dummy, preferably a dummy plate can be mounted to the sensor interface 25. The dummy plate prevents air from getting into the brake system in brake systems without a monitoring system.

It should be clear that the sensor interface 25 in Fig. 3 is only one example of an electronics interface adapted to an exemplary monitoring system 11 to explain the function of such an electronics interface. In another example of an electronics interface, the interface could comprise more or less openings to monitor more or less pressures or other parameters and/or the openings could be arranged in a different way.

### REFERENCE SIGN LIST

- 1: control valve
- 3: valve bracket
- 5: housing compartment comprising a distributor valve
- 7: housing compartment comprising a relay valve
- 9: intermediate plate
- **11**: monitoring system
- 13: fluid channel
- 15, 17, 19 ,21: pressure inlets and outlets of the valve bracket
- 23: standardised fluid interface of the existing control valve
- 25: sensor interface
- 27, 29: control levers
- 31: additional fluid pipe
- 33: fluid interface duplicate
- 35: further interface
- 37: Back side of the intermediate plate
- 39: Front side of the intermediate plate
- 41, 43, 45, 47, 49: through holes of the fluid interface duplicate
- 51, 53, 55, 57, 59: openings of the further interface
- 61, 63, 65, 67, 69: grooves
- 71, 73: openings for a breather and safety valve
- 75,77: openings for the relay valve
- 79, 81: openings for the distributor valve
- 83: opening for the emergency reservoir
- 85: opening for the auxiliary reservoir
- 87, 89, 91, 93: holes to mount the monitoring system
- 95: opening to connect the additional fluid pipe

## Claims

1. Interface adapter (9) for a control valve (1), particularly of a rail car pneumatic brake system, the control valve (1) having at least two housing compartments being in fluid communication with each other via a fluid interface (23), comprising a fluid interface duplicate (33) for enabling fluid communication between the housing compartments through the interface adapter (9) and a further interface (35) being in fluid communication with the fluid interface duplicate (33) for enabling access to the fluid communication between the housing compartments from outside the housing, wherein the interface adapter (9) further comprises an essentially even plate structure having a fluid interface duplicate plate section and a further interface plate section, **characterized in that** the fluid interface duplicate plate section and the further interface plate section extend in the same plane.

2. Interface adapter (9) according to Claim 1, wherein the interface adapter (9) is configured to branch off the fluid communication in a direction at least section wisely parallel to the fluid interface (23).

3. Interface adapter (9) according to claim 1 or 2, wherein the fluid interface duplicate (33) comprises at least one through hole, preferably at least two, three, four, five, six, seven or eight through holes, for enabling distinct fluid flows through the interface adapter (9) and the further interface (35) comprises a number of openings adapted to the number of through holes.

4. Interface adapter (9) according to Claim 3, wherein each opening is in fluid communication with one through hole.

5. Interface adapter (9) according to Claim 4, wherein the fluid communication between the opening and the through hole is realized by means of a fluid channel extending through the interface adapter (9), in particular the plate structure, or a groove arranged on an outer surface of the interface adapter (9), in particular the plate structure.

6. Control valve (1), particularly for a rail car pneumatic brake system, the control valve (1) comprising a housing with at least two housing compartments being in fluid communication with each other via a fluid interface (23) and an interface adapter (9) configured to transfer the fluid interface (23) to an accessible space outside the housing for enabling a further access to the fluid communication, wherein the interface adapter (9) is configured according to any of the Claims 1 to 5.

7. Control valve (1) according to claim 6, wherein the interface adapter (9) is configured to transfer the fluid interface in a direction at least section wisely parallel to the interface (23) between the two housing compartments.

8. Control valve (1) according to any of Claims 6 to 7, wherein the further interface (35) is an electronics interface (25) configured to be connected to an electronic module or a dummy for occupying the electronics interface (25), wherein particularly, the electronic module is mounted to the interface adapter (9), in particular the electronics interface (25).

9. Control valve (1) according to Claim 8, wherein the electronic module comprises a measuring and/or monitoring device (11), in particular a data hub, configured to determine and/or monitor at least one parameter of the fluid flow, such as a pressure.

10. Control valve (1) according to Claim 9, wherein the measuring and/or monitoring device (11), in particular the data hub, comprises a predetermined sensor arrangement of at least one sensor, in particular a pressure sensor, and the electronics interface (25) design is adapted to the predetermined sensor arrangement.

11. Control valve (1) according to Claim 10, wherein the pressure sensors of the predetermined sensor arrangement are each allocated to one electronics interface opening.

12. Control valve (1) according to any of Claims 6 to 11, wherein each of the housing compartments comprises or is connected to a valve arrangement, such as distributor valve or a relay valve arrangement.

13. Control valve (1) according to Claim 12, wherein the further interface (35) comprises a connection, such as an opening or a hole, for connecting to a fluid pipe enabling fluid communication of the further interface (35) with the relay valve arrangement, in particular for enabling access to the control pressure from the relay valve arrangement.

## Patentansprüche

1. Schnittstellenadapter (9) für ein Steuerventil (1), insbesondere eines pneumatischen Bremssystems für Schienenfahrzeuge, wobei das Steuerventil (1) zumindest zwei Gehäuseabteile aufweist, welche über eine Fluidschnittstelle (23) in strömungstechnischer Kommunikation miteinander stehen, umfassend ein Fluidschnittstellenduplikat (33) zum Ermöglichen von strömungstechnischer Kommunikation zwischen den Gehäuseabteilen durch den Schnittstellenadapter (9) und eine weitere Schnittstelle (35), welche mit dem Fluidschnittstellenduplikat (33) in strömungstechnischer Kommunikation steht, um Zugang zu der strömungstechnischen Kommunikation zwischen den Gehäuseabteilen von außerhalb des Gehäuses zu ermöglichen, wobei der Schnittstellenadapter (9) weiter eine im Wesentlichen ebene Plattenstruktur mit einem Fluidschnittstellenduplikatplattenabschnitt und einem weiteren Schnittstellenplattenabschnitt umfasst, **dadurch gekennzeichnet, dass** der Fluidschnittstellenduplikatplattenabschnitt und der weitere Schnittstellenplattenabschnitt in derselben Ebene verlaufen.

2. Schnittstellenadapter (9) nach Anspruch 1, wobei der Schnittstellenadapter (9) dazu konfiguriert ist, die strömungstechnische Kommunikation in eine Richtung abzuzweigen, welche zumindest abschnittsweise parallel zu der Fluidschnittstelle (23) verläuft.

3. Schnittstellenadapter (9) nach Anspruch 1 oder 2, wobei das Fluidschnittstellenduplikat (33) zumindest ein Durchgangsloch, bevorzugt zumindest zwei, drei, vier, fünf, sechs, sieben oder acht Durchgangslöcher umfasst, um unterschiedliche Fluidströme durch den Schnittstellenadapter (9) zu ermöglichen, und die weitere Schnittstelle (35) eine an die Anzahl der Durchgangslöcher angepasste Anzahl von Öffnungen umfasst.

4. Schnittstellenadapter (9) nach Anspruch 3, wobei jede Öffnung in strömungstechnischer Kommunikation mit einem Durchgangsloch steht.

5. Schnittstellenadapter (9) nach Anspruch 4, wobei die strömungstechnische Kommunikation zwischen der Öffnung und dem Durchgangsloch mittels eines sich durch den Schnittstellenadapter (9), insbesondere die Plattenstruktur, erstreckenden Fluidkanals oder einer auf einer Außenfläche des Schnittstellenadapters (9), insbesondere der Plattenstruktur, angeordneten Nut realisiert ist.

6. Steuerventil (1), insbesondere für ein pneumatisches Bremssystem für Schienenfahrzeuge, wobei das Steuerventil (1) ein Gehäuse mit zumindest zwei Gehäuseabteilen, welche über eine Fluidschnittstelle (23) in strömungstechnischer Kommunikation miteinander stehen, und einen Schnittstellenadapter (9) umfasst, welcher dazu konfiguriert ist, die Fluidschnittstelle (23) in einen zugänglichen Raum außerhalb des Gehäuses zu verlegen, um einen weiteren Zugang zu der strömungstechnischen Kommunikation zu ermöglichen, wobei der Schnittstellenadapter (9) nach einem der Ansprüche 1 bis 5 konfiguriert ist.

7. Steuerventil (1) nach Anspruch 6, wobei der Schnittstellenadapter (9) dazu konfiguriert ist, die Fluidschnittstelle in eine Richtung zu verlegen, welche zumindest abschnittsweise parallel zu der Schnittstelle (23) zwischen den zwei Gehäuseabteilen verläuft.

8. Steuerventil (1) nach einem der Ansprüche 6 bis 7, wobei die weitere Schnittstelle (35) eine Elektronikschnittstelle (25) ist, welche zum Anschluss an ein Elektronikmodul oder einen Dummy zum Belegen der Elektronikschnittstelle (25) konfiguriert ist, wobei insbesondere das Elektronikmodul an dem Schnittstellenadapter (9), insbesondere der Elektronikschnittstelle (25), montiert ist.

9. Steuerventil (1) nach Anspruch 8, wobei das Elektronikmodul eine Mess- und/oder Überwachungsvorrichtung (11), insbesondere einen Datenhub umfasst, welcher dazu konfiguriert ist, zumindest einen Parameter des Flüssigkeitsflusses, beispielsweise einen Druck, zu bestimmen und/oder zu überwachen.

10. Steuerventil (1) nach Anspruch 9, wobei die Mess- und/oder Überwachungsvorrichtung (11), insbesondere der Datenhub, eine vorbestimmte Sensoranordnung aus zumindest einem Sensor, insbesondere einem Drucksensor, umfasst und das Design der Elektronikschnittstelle (25) an die vorbestimmte Sensoranordnung angepasst ist.

11. Steuerventil (1) nach Anspruch 10, wobei die Drucksensoren der vorbestimmten Sensoranordnung jeweils einer Öffnung der Elektronikschnittstelle zugeordnet sind.

12. Steuerventil (1) nach einem der Ansprüche 6 bis 11, wobei jedes der Gehäuseabteile eine Ventilanordnung, beispielsweise ein Verteilerventil oder eine Servoventilanordnung, umfasst oder mit einer solchen verbunden ist.

13. Steuerventil (1) nach Anspruch 12, wobei die weitere Schnittstelle (35) einen Anschluss, beispielsweise eine Öffnung oder ein Loch, zum Verbinden mit einer Fluidleitung, welche eine strömungstechnische Kommunikation der weiteren Schnittstelle (35) mit der Servoventilanordnung ermöglicht, insbesondere um Zugang zu dem Steuerdruck aus der Servoventilanordnung zu ermöglichen, umfasst.

## Revendications

1. Adaptateur d'interface (9) pour une vanne de régulation (1), en particulier d'un système de freinage pneumatique de wagon, la vanne de régulation (1) comportant au moins deux compartiments de boîtier en communication fluidique l'un avec l'autre par le biais d'une interface fluidique (23), comprenant une duplication d'interface fluidique (33) pour permettre une communication fluidique entre les compartiments de boîtier au moyen de l'adaptateur d'interface (9) et une autre interface (35) qui est en communication fluidique avec la duplication d'interface fluidique (33) pour permettre un accès à la communication fluidique entre les compartiments de boîtier depuis l'extérieur du boîtier, dans lequel l'adaptateur d'interface (9) comprend en outre une structure de plaque sensiblement plane comportant une section de plaque de duplication d'interface fluidique et une autre section de plaque d'interface, **caractérisé en ce que** la section de plaque de duplication d'interface fluidique et l'autre section de plaque d'interface s'étendent dans le même plan.

2. Adaptateur d'interface (9) selon la revendication 1, dans lequel l'adaptateur d'interface (9) est configuré pour bifurquer la communication fluidique dans une direction parallèle au moins par section à l'interface fluidique (23).

3. Adaptateur d'interface (9) selon la revendication 1 ou 2, dans lequel la duplication d'interface de fluide (33) comprend au moins un trou traversant, de préférence au moins deux, trois, quatre, cinq, six, sept ou huit trous traversants, pour permettre des écoulements de fluide distincts à travers l'adaptateur d'interface (9) et l'autre interface (35) comprend un nombre d'ouvertures adapté au nombre de trous traversants.

4. Adaptateur d'interface (9) selon la revendication 3, dans lequel chaque ouverture est en communication fluidique avec un trou traversant.

5. Adaptateur d'interface (9) selon la revendication 4, dans lequel la communication fluidique entre l'ouverture et le trou traversant est réalisée au moyen d'un canal fluidique s'étendant à travers l'adaptateur d'interface (9), en particulier la structure de plaque, ou d'une rainure agencée sur une surface externe de l'adaptateur d'interface (9), en particulier la structure de plaque.

6. Vanne de régulation (1), en particulier pour un système de freinage pneumatique de wagon, la vanne de régulation (1) comprenant un boîtier avec au moins deux compartiments de boîtier en communication fluidique l'un avec l'autre par le biais d'une interface fluidique (23) et un adaptateur d'interface (9) configuré pour transférer l'interface fluidique (23) vers un espace accessible à l'extérieur du boîtier pour permettre un accès supplémentaire à la communication fluidique, dans laquelle l'adaptateur d'interface (9) est configuré selon l'une quelconque des revendications 1 à 5.

7. Vanne de régulation (1) selon la revendication 6, dans laquelle l'adaptateur d'interface (9) est configuré pour transférer l'interface de fluide dans une direction parallèle au moins par section à l'interface (23) entre les deux compartiments de boîtier.

8. Vanne de régulation (1) selon l'une quelconque des revendications 6 à 7, dans laquelle l'autre interface (35) est une interface électronique (25) configurée pour être reliée à un module électronique ou à un dispositif factice pour occuper l'interface électronique (25), dans laquelle, particulièrement le module électronique est monté sur l'adaptateur d'interface (9), en particulier l'interface électronique (25).

9. Vanne de régulation (1) selon la revendication 8, dans laquelle le module électronique comprend un dispositif de mesure et/ou de surveillance (11), en particulier un concentrateur de données, configuré pour déterminer et/ou surveiller au moins un paramètre de l'écoulement de fluide, tel qu'une pression.

10. Vanne de régulation (1) selon la revendication 9, dans laquelle le dispositif de mesure et/ou de surveillance (11), en particulier le concentrateur de données, comprend un agencement de capteur prédéterminé d'au moins un capteur, en particulier un capteur de pression, et la conception de l'interface électronique (25) est adaptée à l'agencement de capteur prédéterminé.

11. Vanne de régulation (1) selon la revendication 10, dans laquelle les capteurs de pression de l'agencement de capteur prédéterminé sont chacun affectés à une ouverture d'interface électronique.

12. Vanne de régulation (1) selon l'une quelconque des revendications 6 à 11, dans laquelle chacun des compartiments de boîtier comprend, ou est relié à, un agencement de vanne, tel qu'un agencement de vanne de distribution ou de vanne de relais.

13. Vanne de régulation (1) selon la revendication 12, dans laquelle l'autre interface (35) comprend une connexion, telle qu'une ouverture ou un trou, pour un raccordement à un tuyau de fluide permettant une communication fluidique de l'autre interface (35) avec l'agencement de vanne de relais, en particulier pour permettre un accès à la pression de régulation à partir de l'agencement de vanne de relais.
